# EUROPEAN PATENT SPECIFICATION

(11) **EP 2 456 674 B1**
(45) Date of publication and mention of the grant of the patent: **21.08.2013**
(21) Application number: 10732805.6
(22) Date of filing: 07.07.2010
(51) Int. Cl.: B65B 69/00, B65G 17/24, B65G 47/24, B65D 1/09

(54) **METHOD AND APPARATUS FOR POSITIONING A WORKPIECE**
VERFAHREN UND VORRICHTUNG ZUR POSITIONIERUNG EINES WERKSTÜCKES.
PROCÉDÉ ET DISPOSITIF POUR POSITIONNER UNE PIÈCE DE TRAVAIL

(30) Priority: 24.07.2009 US 509153
(43) Date of publication of application: 30.05.2012
(73) Proprietor: Laitram, LLC, Harahan, LA 70123 (US)
(72) Inventor: FOURNEY, Matthew L., Laurel Maryland 20723 (US)
(74) Representative: Walker, Ross Thomson
(86) International application number: PCT/US2010/041126
(87) International publication number: WO 2011/011196

(56) References cited:
- EP-B1- 1 877 329
- WO-A2-2007/121015
- US-A1- 2006 219 526
- US-A1- 2006 249 354
- US-A1- 2007 162 174

## Description

### BACKGROUND

The invention relates generally to the positioning of workpieces and, more specifically, to a conveyor and methods for presenting all sides of a workpiece conveyed through a work area on a roller-belt conveyor belt to a tool.

Meat products are often delivered to meat-cutting plants in boxes. Within the boxes are multiple cuts of meat in sealed bags. Typically, the boxes are cut open manually, and the bags of meat are set on conveyors to be opened by other operators. Manual cutting is labor-intensive and presents a safety risk.

X-ray and other inspection or sensing tools are used to identify articles or inspect them for suspicious contents. An inspection is more robust if the articles are inspected from different views.

### SUMMARY

In one aspect, a workpiece-positioning apparatus embodying features of the invention includes a conveyor belt that can be advanced in or opposite to a first direction. The conveyor belt has workpiece-supporting rollers that can rotate on axes oriented oblique to the first direction. The conveyor-belt rollers support a workpiece within a four-sided work area. A guide surface disposed along each side of the work area registers and guides the workpiece. A tool is disposed at an intermediate position along each side of the work area to interact with the side face of the workpiece registered against the guide surface along the side. The conveyor belt is selectively advanced in and opposite to the first direction, and the rollers are selectively actuated and deactuated in coordination with the advancement of the conveyor belt. The coordination causes the workpiece to translate through the work area without rotation along the guide surfaces and past the tool along each side of the work area so that each side face of the workpiece is presented to the tool.

In another aspect of the invention, a method for positioning a workpiece comprises:
(a) translating a workpiece atop obliquely rotatable rollers of a bidirectional conveyor belt without rotation on a rectangular path along the sides of a rectangular work area; and
(b) presenting a different side face of the workpiece along each side of the work area to a tool.

### BRIEF DESCRIPTION OF THE DRAWINGS

These aspects and features of the invention, as well as its advantages, are better understood by referring to the following description, appended claims, and accompanying drawings, in which:
FIG. 1 is an isometric view of a box cutter using a box-positioning conveyor embodying features of the invention;
FIGS. 2A-2C are top plan views of the box cutter of FIG. 1 illustrating the path of a box through the cutter;
FIGS. 3A-3F are cutaway side views of a portion of the oblique-roller conveyor belt in the box cutter of FIG. 1 with the rollers actuated and deactuated in coordination with the direction of motion of the conveyor belt;
FIG. 4 is a block diagram of a control system usable in a box cutter as in FIG. 1;
FIG. 5 is a timing diagram illustrating the sequence of control signals used to move a box through the work area along the path shown in FIGS. 2A-2C; and
FIG. 6 is an isometric view of an inspection station using a positioning conveyor as in FIG. 1.

### DETAILED DESCRIPTION

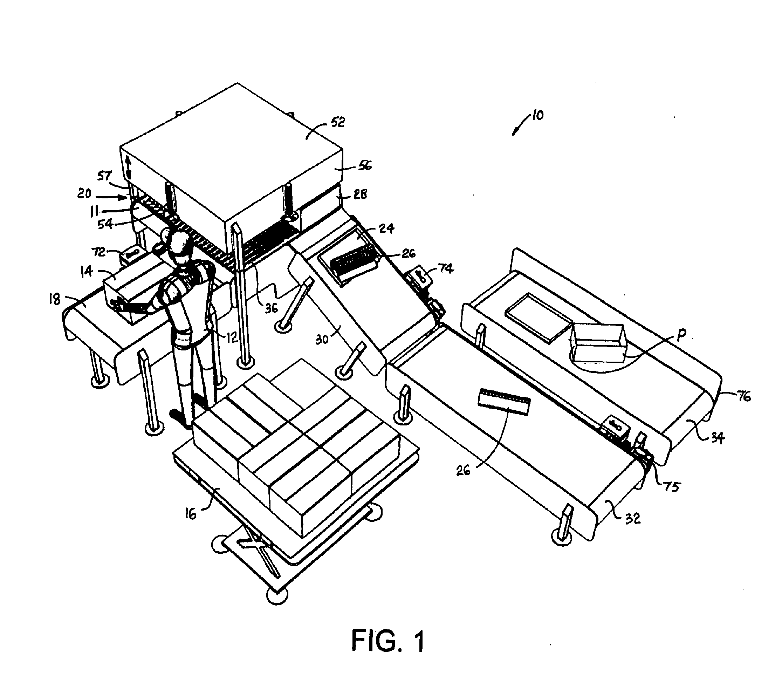

A box cutting system 10 using a workpiece-positioning conveyor 11 embodying features of the invention is shown in FIG. 1. A human operator 12 unloads the workpiece, in this example, a box 14, from a pallet layer on a scissor lift 16 and places it on an infeed conveyor 18. The operator presses a button (not shown) to index the box into a box cutter 20. After all four side faces, or panels P, of the box are cut through, the bottom 24 of the box and the enclosed contents 26, along with the top 28 of the box, are discharged from the box cutter onto a discharge conveyor 30, such as a decline conveyor or a chute. While the box is being cut, the operator places an uncut box on the infeed conveyor. Then he manually separates the top and bottom of the cut box from the box's contents on the discharge conveyor 30 or on a takeaway conveyor 32. He deposits the box top and bottom on a trash conveyor 34 for disposal. The takeaway conveyor 32 transports the contents 26 to downstream processing stations. The close proximity of the infeed conveyor to the discharge, takeaway, and trash conveyors allows the operator to perform these steps efficiently.

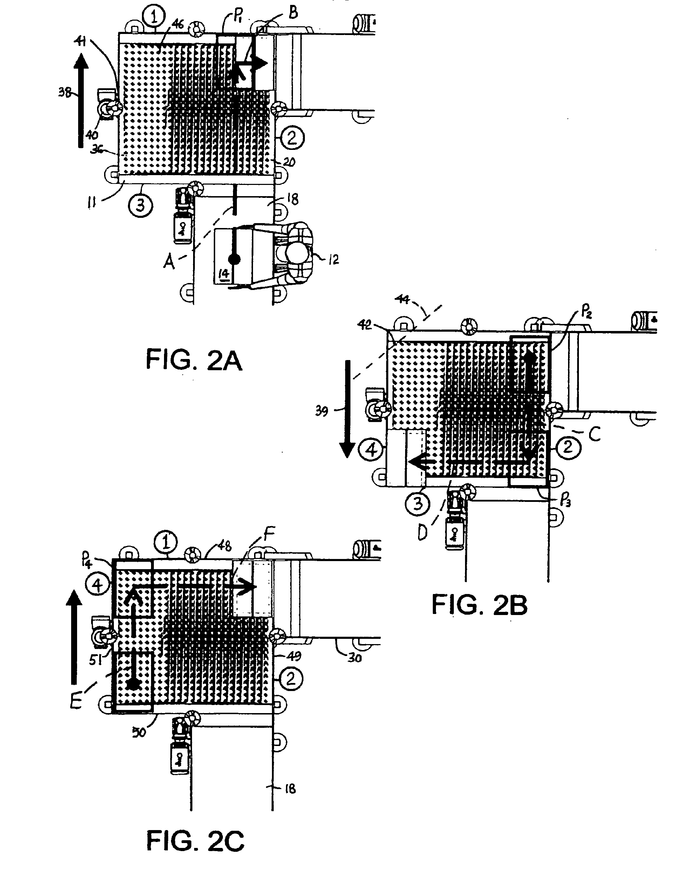

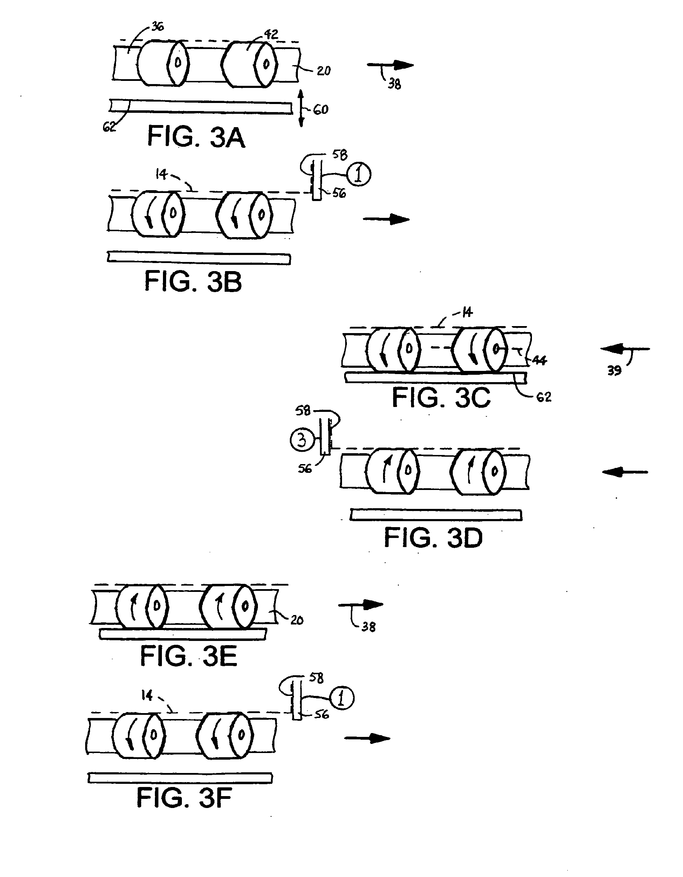

Details of the box cutter 20 are shown in FIGS. 1-3. As shown in FIGS. 2A-2C, the box cutter includes a workpiece-positioning system 11 with a conveyor belt 36 that can be advanced in a forward direction 38 or a reverse direction 39. The conveyor belt is conventionally trained around pulleys or sprockets (not shown) at each end of an upper run. In this example, the conveyor belt is driven bidirectionally by a motor 40 driving a shaft 41 on which drive sprockets engaging the belt in the middle of a return run are mounted. The conveyor belt has a plurality of rollers 40 that extend through the thickness of the belt, as shown in FIGS. 3A-3F, to support the bottoms of the boxes. The rollers are generally cylindrical in shape and are mounted on axles forming rotational axes 44 that are oblique to the direction of belt travel 38, 39. The INTRALOX^{®} Series 400 Activated Roller™ belt, an oblique-roller modular plastic belt manufactured and sold by Intralox, L.L.C. of Harahan, Louisiana, U.S.A., is suitable for this application.

As shown in FIGS. 2A-2C, the upper run of the conveyor belt 36 defines a rectangular work area 46 in the box cutter 20. Because the length of the upper run equals the width of the conveyor belt, the rectangular work area is generally square with four sides 48, 49, 50, 51 of equal length. As shown in FIG. 1, the box cutter includes a cutting head 52 to which four cutting tools, such as circular saws 54, are mounted to side walls 56. The saws are mounted along each side wall of the cutting head at intermediate positions, such as midway, between opposite connecting side walls. The cutting head may be raised by lifts residing in, for example, telescoping legs 57 at the corners of the box cutter to allow boxes to enter and exit the box cutter and lowered to position the cutting tools to operate on the boxes. The interior sides of the four side walls 56 of the cutting head 52 include guide surfaces 58 that register the boxes and guide them past the cutting tools along each side of the work area. The cutting head also forms a safety cover over the work area and prevents the escape of saw dust from the cutter.

As shown in FIGS. 3A-3F, the oblique belt rollers 42 are actuated and deactuated by selectively raising and lowering, as indicated by arrow 60, a bearing surface 62 into and out of contact with the rollers protruding past the bottom of the belt as the belt advances in either direction. The bearing surface may be moved into and out of contact with the rollers in ways other than raising and lowering. For example, an array of parallel bearing surfaces extending in the direction of belt travel and spaced laterally apart the same distance as the longitudinal columns of belt rollers could be moved into and out of contact by lateral translation. Furthermore, the bearing surfaces could be formed on the peripheries of rollers rather than on flat pans or strips. When the bearing surface contacts the rollers, the motion of the belt causes the rollers to rotate on their oblique axes 44 with one component of motion under a supported box in the direction of belt travel and another component perpendicular toward a side of the belt, as shown in FIGS. 3C and 3E. So, with the bearing surface contacting the rollers, the rollers are actuated. When the bearing surface is lowered or otherwise moved out of contact with the belt rollers, the rollers are free to rotate on their axes; they are deactuated. When the rollers are deactuated, they rotate on their oblique axes only when a box supported atop the rollers encounters an obstruction, such as a guide surface blocking its advance in the direction of belt travel, as shown in FIGS. 3B, 3D, and 3F. In those circumstances, the oblique rollers rotate with a component of motion opposite to the direction of belt travel and an orthogonal component parallel to the blocking guide surface, which slides the box along, while pushing it against, the guide surface. In general, a belt roller is considered to be "actuated" when it is actively rotated by something, e.g., rolling on a bearing surface, other than interaction with a box whose progress in the direction of belt travel is blocked.

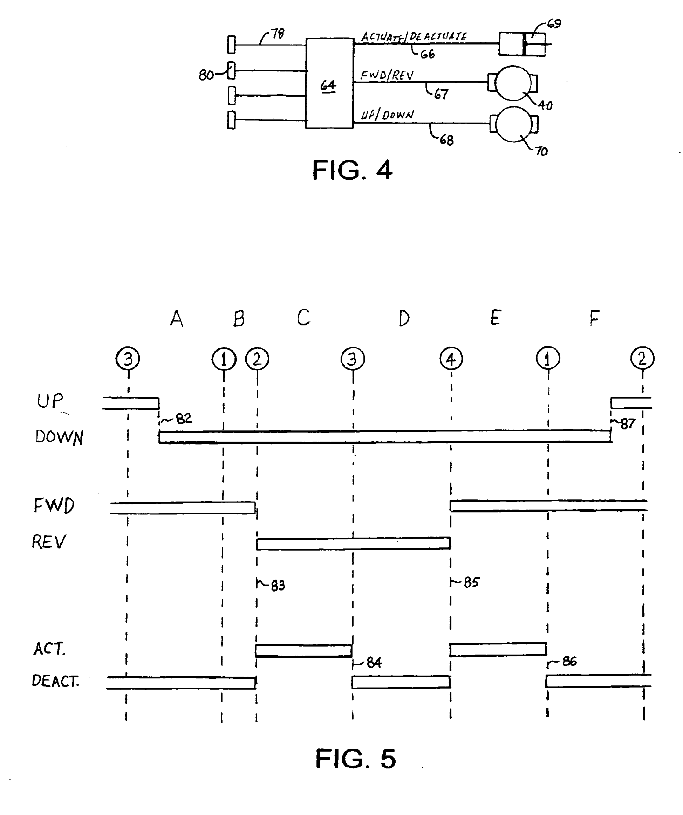

The box cutter is controlled by a controller 64, as shown in FIG. 4. The controller may be realized as a programmable logic controller, a desktop computer, a workstation, an embedded microcontroller, or any suitable programmable device. The controller coordinates the direction of belt travel with the actuation of the belt rollers to move the box around the work area past each of the cutting tools. The controller has three main output signals: an actuate/deactuate signal 66 that raises and lowers the bearing surface by a linear actuator 69, for instance; a forward/reverse signal 67 that controls the direction of the conveyor belt motor 40, and an up/down signal to a lift motor 70 that raises and lowers the cutting head. Other output signals (not shown) include signals to drive the infeed conveyor drive and, perhaps, the discharge, takeaway, and trash conveyor drives 74, 75, 76 (as in FIG. 1) and to turn the cutting tools on and off. The controller also receives input signals 78 from sensors 80, such as pressure switches or optical devices, that sense when a box is in contact with one of the guide surfaces along the side of the work area.

The operational sequence of cutting a box with the box cutter is described with reference to FIGS. 2, 3, and 5. The operator 12 places the box 14 on the infeed conveyor 18 square with the rectangular work area 46 of the box cutter 20, as shown in FIG. 2A. In the meantime, as indicated by the timing diagram of FIG. 5, the cutting tool is in a raised position (UP) to permit the box to enter the work area. The conveyor belt is advancing in the forward direction (FWD) 38, and the belt rollers 42 are deactuated. For illustrative purposes, the four sides of the work area are indicated by the numerals 1-4 in circles in the figures. Each of the vertical dashed lines in FIG. 5 extending down from the circled numerals indicate the time of initial contact or crossing of a box with that side indicated by the numeral in the associated circle. The box follows a generally rectangular path through the work area. The path segments are identified as A-F in FIG. 2 and correspond roughly to FIGS. 3A-3F and to the time intervals A-F in FIG. 5.

The box is indexed by the infeed conveyor over side 3 of the cutter's work area. Once the box clears side 3, the controller lowers the cutting head by changing the state of the UP/DOWN signal to DOWN (82 in FIG. 5). Because the conveyor belt is moving forward and the rollers are deactuated, the box follows linear path segment A to side 1 of the work area. As shown in FIG. 3A, the bearing surface 62 is lowered and the rollers do not rotate. As soon as the forward side panel P₁ of the box hits the guide surface 48 at side 1 of the work area, the box's forward progress is blocked, which causes the deactuated rollers to rotate as shown in FIG. 3B and push the box to the right, guided by the guide surface on side 1 along path segment B in FIG. 2A.

Once the right side panel P₂ hits the guide surface at side 2 of the work area, the signal from the sensor for side 2 notifies the controller to reverse the conveyor belt and actuate the belt rollers (83 in FIG. 5). The bearing surface 62 underlying the conveyor belt in the work area is raised into contact with the bottoms of the rollers, which keeps them rolling in the same direction as for path segment B, but also to push the box along the guide surface on side 2 past the rotating circular saw blade and towards side 3. The saw blade cuts a horizontal slit along side panel P₂.

When the rearward side panel P₃ of the box, now leading, hits the guide surface at side 3 of the work area, a signal from the sensor for side 3 notifies the controller of the contact. The controller deactuates the rollers (84 in FIG. 5), which causes the box on the reverse-traveling conveyor belt to slide laterally to the left in FIG. 2 against the guide surface at side 3 along linear path segment D. The cutting tool on side 3 cuts a horizontal slit in side panel P₃ of the box as it slides past.

When the left side panel P₄ of the box hits the guide rail at side 4 of the work area, the sensor for side 4 signals the controller to reverse the conveyor belt back to the forward direction and to actuate the belt rollers (85 in FIG. 5). This causes the actuated rollers to rotate as in FIG. 3E and push the box against the guide surface at side 4 of the work area as the box is conveyed along path segment E. The saw along side 4 cuts a horizontal slit in side panel P₄ of the box as it passes.

When the forward side panel P₁ of the box has reached side 1 of the work area, the signal from the sensor for side 1 of the work area notifies the controller, which then deactuates the rollers (86 in FIG. 5). Because the box is blocked by the guide surface at side 1, the deactuated rollers reverse their rotation and slide the box along the side 1 guide rail on a path segment F. Just after the cutting tool on side 1 cuts a horizontal slit in forward panel P₁ of the box, the controller signals the lift to raise (UP, 87 in FIG. 5) so that the box can be discharged over side 2 of the work area onto the discharge conveyor 30. This cycle repeats for the next incoming box.

Thus, the box cutter's workpiece-positioning belt conveyor translates a box without rotation in a generally rectangular path pushed in registration against guide surfaces bounding the work area on four sides past a cutting tool on each side. Each cutting tool cuts a horizontal slit in one side panel of the box. The slits are aligned so that a continuous cut is made around the periphery of the box to allow for easy removal of its contents and disposal of the box sections.

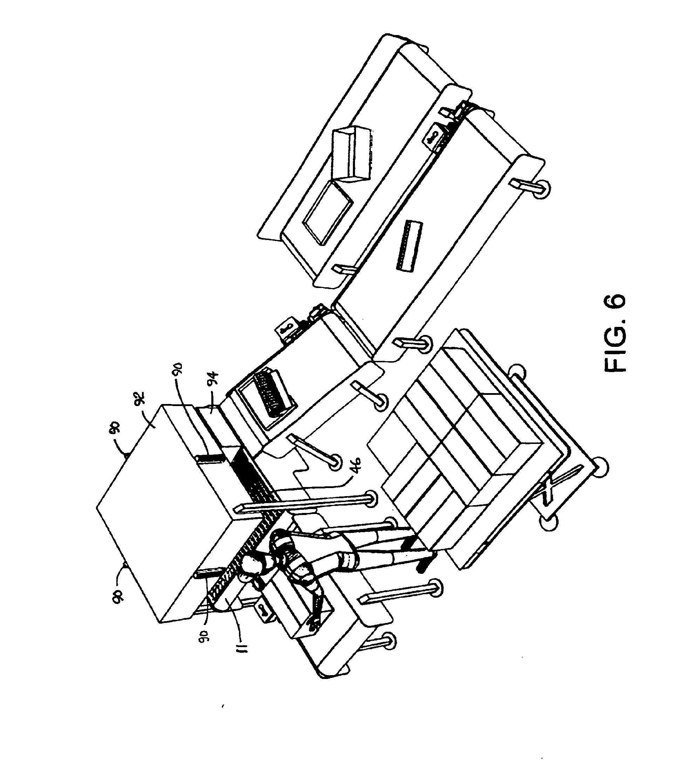

As shown in FIG. 6, the workpiece-positioning belt conveyor 11 can be used with other tools 90, such as bar-code or other optical readers, RFID-tag readers, x-ray scanners, or other inspection tools 90, positioned along each side of the work area 46. The inspection tools are shown mounted to the four sides of a hood 92 like the cutting head of the box cutter of FIG. 1. (The hood is shown in the raised position in FIG. 6.) As each side face 94 of the workpiece is presented to one of the tools when the hood is lowered, the tool interacts with that facing side face. In the case of an inspection tool, the side face of the workpiece presented to the inspection tool can be inspected directly or the contents of the workpiece can be inspected through the side face. The workpiece-positioning conveyor is effective in presenting each side face of the workpiece to a tool that interacts in some way with the presented side face.

Although the invention has been described in detail with reference to specific versions, other versions are possible. For example, the conveyor belt shown has rollers that extend past the bottom of the belt to engage bearing surfaces. But rollers that do not necessarily extend below the bottom of the belt and that can be actuated in other ways, such as motorized rollers or magnetically actuated rollers, could be used as well in the box cutter. As another example, the controller could be programmed to convey the workpiece on a different path through the work area. Different kinds of inspection tools or sensors or cutting tools arranged to cut differently shaped cuts into the sides of boxes could be used. So, as these few examples suggest, the claims are not meant to be limited to the details of the disclosure.

## Claims

1. A workpiece-positioning apparatus (11) comprising:
a conveyor belt (36) advanceable in and opposite to a first direction (38) and having a plurality of rollers (40) rotatable on axes oblique to the first direction and supporting a workpiece having four side faces within a work area (46) having four sides (48, 49, 50, 51);
a guide surface (58) disposed along each of the sides of the work area to register and guide the workpiece;
a plurality of tools (54), each disposed at an intermediate position along each of the sides of the work area to interact with the side face of the workpiece registered against the guide surface along the side;
wherein the conveyor belt is selectively advanced in and opposite to the first direction and the rollers are selectively actuated and deactuated in coordination with the advancement of the conveyor belt to translate the workpiece through the work area without rotation against the guide surfaces and past the tool along each side of the work area so that each side face of the workpiece is presented to the tool.

2. A workpiece-positioning apparatus as in claim 1 comprising a bearing surface (62) underlying the conveyor belt in the work area, wherein the bearing surface is selectively movable into and out of contact with the rollers to actuate and deactuate the rollers as the conveyor belt advances.

3. A workpiece-positioning apparatus as in claim 1 wherein the tools are cutting tools (54) and the workpiece is a box (14) and wherein the workpiece positioning apparatus comprises a cutting head (52) having four side walls, each side wall forming one of the guide surfaces and a mounting support for one of the cutting tools and wherein the cutting head is raised to allow the box to enter and exit the work area and lowered to guide the box through the work area and past the cutting tools.

4. A workpiece-positioning apparatus as in claim 3 wherein each cutting tool comprises a circular saw blade cutting in a horizontal plane.

5. A workpiece-positioning apparatus as in claim 1 further comprising an infeed conveyor (18) delivering the workpiece to the conveyor belt over a first side of the work area and a discharge conveyor (30) receiving the workpiece from the conveyor belt over a different second side of the work area.

6. A workpiece-positioning apparatus as in claim 1 comprising a controller (64) selectively advancing the conveyor belt in coordination with actuating and deactuating the rollers to cause the workpiece to follow a path through the work area against the guide surfaces at the sides of the work area to present each tool with a different side face of the workpiece.

7. A workpiece-positioning apparatus as in claim 6 further comprising a sensor associated with at least one of the sides to detect a workpiece contacting the guide surface on the at least one side.

8. A workpiece-positioning apparatus as in claim 1 wherein the tools are inspection tools for inspecting the workpiece along or through each of the four side faces.

9. A method for positioning a workpiece, comprising:
translating a workpiece atop obliquely rotatable rollers of a bidirectional conveyor belt without rotation on a rectangular path along the sides of a rectangular work area;
presenting a different side face of the workpiece along each side of the work area to a tool.

10. The method of claim 9 wherein the tool is a cutting tool forming a cut along a different side face of the workpiece along each side of the work area, wherein preferably the tool is an inspection tool inspecting the workpiece along or through a different side face of the workpiece along each side of the work area.

11. The method of claim 9 comprising actuating the rollers to rotate in coordination with reversing the direction of the conveyor belt to push the workpiece toward a side of the work area.

12. The method of claim 9 comprising providing a guide surfaces around the periphery of the work area along which an outer side face of the workpiece rides as the workpiece is translated.

13. The method of claim 9 further comprising sensing when the workpiece is at each side of the work area.

14. The method of claim 9 wherein translating a workpiece on a rectangular path comprises:
conveying the workpiece by advancing the conveyor belt in a first direction with the rollers deactivated to a guide surface along a first side of the work area;
translating the workpiece perpendicular to the first direction along the guide surface on the first side atop the deactuated oblique rollers as the conveyor belt advances in the first direction until the workpiece reaches a second side of the work area;
reversing the direction of the conveyor belt and actuating the rollers to push the workpiece along a guide surface on the second side of the work area as the conveyor belt advances opposite to the first direction until the workpiece reaches a third side of the work area;
deactuating the rollers and translating the workpiece perpendicular to the first direction along a guide surface on the third side atop the deactuated oblique rollers as the conveyor belt advances opposite to the first direction until the workpiece reaches a fourth side of the work area;
reversing the direction of the conveyor belt and actuating the rollers to push the workpiece along a guide surface on the fourth side of the work area as the conveyor belt advances in the first direction until the workpiece reaches the first side of the work area;
translating the workpiece perpendicular to the first direction along the guide surface on the first side atop the deactuated oblique rollers as the conveyor belt advances in the first direction until the workpiece exits the work area at the second side.

15. The method of claim 9 further comprising feeding the workpiece to the work area and receiving the workpiece from the work area across adjacent sides of the work area.

## Patentansprüche

1. Werkstückpositionierungsvorrichtung (11), umfassend:
ein Förderband (36), das in einer ersten Richtung (38) vorwärts bewegbar und dieser entgegengesetzt ist und mehrere Walzen (40) aufweist, die auf Achsen rotierbar sind, die schräg zur ersten Richtung verlaufen, und ein Werkstück mit vier Seitenflächen in einem Arbeitsbereich (46) mit vier Seiten (48, 49, 50, 51) halten;
einer Leitfläche (58), die entlang jeder der Seiten des Arbeitsbereichs angeordnet ist, um das Werkstück zu registrieren und zu leiten;
mehrere Werkzeuge (54), die jeweils an einer Zwischenposition entlang jeder der Seiten des Arbeitsbereichs angeordnet sind, um mit der Seitenfläche des Werkstücks zu interagieren, das gegen die Leitfläche entlang der Seite registriert ist;
wobei das Förderband selektiv in die und entgegen der ersten Richtung vorwärts bewegt wird und die Walzen selektiv in Koordination mit der Vorwärtsbewegung des Förderbands aktiviert und deaktiviert werden, um das Werkstück durch den Arbeitsbereich ohne Rotation gegen die Leitflächen und vorbei an dem Werkzeug entlang jeder Seite des Arbeitsbereichs zu übersetzen, so dass dem Werkzeug jede Seitenfläche des Werkstücks präsentiert wird.

2. Werkstückpositionierungsvorrichtung nach Anspruch 1, umfassend eine Lagerfläche (62), die unter dem Förderband im Arbeitsbereich liegt, wobei die Lagerfläche selektiv in und außer Kontakt mit den Walzen bewegt werden kann, um die Walzen zu aktivieren und zu deaktivieren, wenn sich das Förderband vorwärts bewegt.

3. Werkstückpositionierungsvorrichtung nach Anspruch 1, wobei die Werkzeuge Schneidwerkzeuge (54) sind und das Werkstück eine Kiste (14) ist und wobei die Werkstückpositionierungsvorrichtung einen Schneidkopf (52) mit vier Seitenwänden umfasst, wobei jede Seitenwand eine der Leitflächen und eine Anbringungshalterung für eines der Schneidwerkzeuge bildet und wobei der Schneidkopf angehoben ist, um zu gestatten, dass die Kiste in den Arbeitsbereich kommt und ihn verlässt, und gesenkt ist, um die Kiste durch den Arbeitsbereich und an den Schneidwerkzeugen vorbei zu leiten.

4. Werkstückpositionierungsvorrichtung nach Anspruch 3, wobei jedes Schneidwerkzeug ein kreisförmiges Sägeblatt umfasst, das in einer horizontalen Ebene schneidet.

5. Werkstückpositionierungsvorrichtung nach Anspruch 1, ferner umfassend ein Zubringer-Förderband (18), das das Werkstück dem Förderband über eine erste Seite des Arbeitsbereichs zuführt, und ein Abzugs-Förderband (30), das das Werkstück vom Förderband über eine unterschiedliche zweite Seite des Arbeitsbereichs aufnimmt.

6. Werkstückpositionierungsvorrichtung nach Anspruch 1, umfassend eine Steuerung (64), die das Förderband in Koordination mit dem Aktivieren und Deaktivieren der Walzen selektiv vorwärts bewegt, um zu bewirken, dass das Werkstück einem Weg durch den Arbeitsbereich gegen die Leitflächen an den Seiten des Arbeitsbereichs folgt, um jedem Werkzeug eine unterschiedliche Seitenfläche des Werkstücks zu präsentieren.

7. Werkstückpositionierungsvorrichtung nach Anspruch 6, ferner umfassend einen Sensor, der zumindest einer der Seiten zugeordnet ist, um ein Werkstück zu erfassen, das die Leitfläche auf der zumindest einen Seite berührt.

8. Werkstückpositionierungsvorrichtung nach Anspruch 1, wobei die Werkzeuge Inspektionswerkzeuge zum Inspizieren des Werkstücks entlang oder durch jede der vier Seitenflächen sind.

9. Verfahren zum Positionieren eines Werkstücks, umfassend:
Übersetzen eines Werkstücks oben auf schräg rotierbaren Walzen eines bidirektionalen Förderbands ohne Rotation auf einem rechteckigen Weg entlang der Seiten eines rechteckigen Arbeitsbereichs;
Präsentieren einer unterschiedlichen Seitenfläche des Werkstücks entlang jeder Seite des Arbeitsbereichs zu einem Werkzeug.

10. Verfahren nach Anspruch 9, wobei das Werkzeug ein Schneidwerkzeug ist, das einen Schnitt entlang einer unterschiedlichen Seitenfläche des Werkstücks entlang jeder Seite des Arbeitsbereichs ist, wobei das Werkzeug bevorzugt ein Inspektionswerkzeug ist, das das Werkstück entlang einer oder durch eine unterschiedliche Seitenfläche des Werkstücks entlang jeder Seite des Arbeitsbereichs inspiziert.

11. Verfahren nach Anspruch 9, umfassend das Aktivieren der Walzen, damit sie in Koordination mit der Umkehrung der Richtung des Förderbands rotieren, um das Werkstück zu einer Seite des Arbeitsbereichs zu schieben.

12. Verfahren nach Anspruch 9, umfassend das Vorsehen von Leitflächen rund um den Umfang des Arbeitsbereichs, entlang welchem eine äußere Seitenfläche des Werkstücks läuft, wenn das Werkstück übersetzt wird.

13. Verfahren nach Anspruch 9, ferner umfassend das Messen, wenn sich das Werkstück auf jeder Seite des Arbeitsbereichs befindet.

14. Verfahren nach Anspruch 9, wobei das Übersetzen eines Werkstücks auf einem rechteckigen Weg umfasst:
Befördern des Werkstücks durch Vorwärtsbewegen des Förderbands in einer ersten Richtung, wobei die Walzen deaktiviert sind, zu einer Leitfläche entlang einer ersten Seite des Arbeitsbereichs;
Übersetzen des Werkstücks senkrecht zur ersten Richtung entlang der Leitfläche auf der ersten Seite oben auf den deaktivierten schrägen Walzen, wenn sich das Förderband in die erste Richtung vorwärts bewegt, bis das Werkstück eine zweite Seite des Arbeitsbereichs erreicht;
Umkehren der Richtung des Förderbands und Betätigen der Walzen, um das Werkstück entlang einer Leitfläche auf der zweiten Seite des Arbeitsbereichs zu schieben, wenn sich das Förderband entgegen der ersten Richtung vorwärts bewegt, bis das Werkstück eine dritte Seite des Arbeitsbereichs erreicht;
Deaktivieren der Walzen und Übersetzen des Werkstücks senkrecht zur ersten Richtung entlang einer Leitfläche auf der dritten Seite oben auf den deaktivierten schrägen Walzen, wenn sich das Förderband entgegen der ersten Richtung vorwärts bewegt, bis das Werkstück eine vierte Seite des Arbeitsbereichs erreicht;
Umkehren der Richtung des Förderbands und Aktivieren der Walzen, um das Werkstück entlang einer Leitfläche auf der vierten Seite des Arbeitsbereichs zu schieben, wenn sich das Förderband in die erste Richtung vorwärts bewegt, bis das Werkstück die erste Seite des Arbeitsbereichs erreicht;
Übersetzen des Werkstücks senkrecht zur ersten Richtung entlang der Leitfläche auf der ersten Seite oben auf den deaktivierten schrägen Rollen, wenn sich das Förderband in die erste Richtung vorwärts bewegt, bis das Werkstück den Arbeitsbereich auf der zweiten Seite verlässt.

15. Verfahren nach Anspruch 9, ferner mit dem Zuführen des Werkstücks zum Arbeitsbereich und Empfangen des Werkstücks aus dem Arbeitsbereich quer über benachbarte Seiten des Arbeitsbereichs.

## Revendications

1. Appareil de positionnement d'une pièce à travailler (11) comprenant :
un tapis transporteur (36) pouvant avancer dans un premier sens (38) et dans le sens opposé, comportant une pluralité de rouleaux (40) en rotation sur des axes obliques par rapport au premier sens, et soutenant une pièce à travailler présentant quatre faces latérales dans une zone de travail (46) ayant quatre côtés (48, 49, 50, 51) ;
une surface de guidage (58) disposée suivant chacun des côtés de la zone de travail pour faire coïncide et guider la pièce à travailler ;
une pluralité d'outils (54), disposés chacun dans une position intermédiaire suivant chacun des côtés de la zone de travail afin d'interagir avec la face latérale de la pièce à travailler qui coïncide avec la surface de guidage suivant le côté ;
dans lequel le tapis transporteur avance de manière sélective dans le premier sens et dans le sens opposé, et les rouleaux sont activés et désactivés de manière sélective en coordination avec l'avance du tapis transporteur afin de déplacer en translation la pièce à travailler à travers la zone de travail sans rotation contre les surfaces de guidage et après l'outil suivant chaque côté de la zone de travail de façon à ce que chaque face latérale de la pièce à travailler soit présentée à l'outil.

2. Appareil de positionnement d'une pièce à travailler selon la revendication 1, comprenant une surface de palier (62) soutenant le tapis transporteur dans la zone de travail, dans lequel la surface de palier peut être déplacée de manière sélective en contact et hors de contact avec les rouleaux afin d'activer et de désactiver les rouleaux lorsque le tapis transporteur avance.

3. Appareil de positionnement d'une pièce à travailler selon la revendication 1, dans lequel les outils sont des outils de coupe (54) et la pièce à travailler est une boîte (14), l'appareil de positionnement d'une pièce à travailler comprenant une tête de coupe (52) présentant quatre parois latérales, chaque paroi latérale formant l'une des surfaces de guidage et un support de montage pour l'un des outils de coupe, dans lequel la tête de coupe est levée pour permettre d'introduire la boîte dans la zone de travail et de l'en enlever, et abaissée pour guider la boîte dans la zone de travail et après les outils de coupe.

4. Appareil de positionnement d'une pièce à travailler selon la revendication 3, dans lequel chaque outil de coupe comprend une lame de scie circulaire coupant dans un plan horizontal.

5. Appareil de positionnement d'une pièce à travailler selon la revendication 1, comprenant en outre un transporteur d'alimentation (18) apportant la pièce à travailler au tapis transporteur sur un premier côté de la zone de travail, et un transporteur de déchargement (30) recevant la pièce à travailler du tapis transporteur sur un deuxième côté différent de la zone de travail.

6. Appareil de positionnement d'une pièce à travailler selon la revendication 1, comprenant un contrôleur (64) faisant avancer de manière sélective le tapis transporteur en coordination avec l'activation et la désactivation des rouleaux afin d'amener la pièce à travailler à suivre un trajet dans la zone de travail contre les surfaces de guidage sur les côtés de la zone de travail afin de présenter à chaque outil une face latérale différente de la pièce à travailler.

7. Appareil de positionnement d'une pièce à travailler selon la revendication 6, comprenant en outre un capteur associé à au moins l'un des côtés afin de détecter une pièce à travailler en contact avec la surface de guidage sur ledit au moins un côté.

8. Appareil de positionnement d'une pièce à travailler selon la revendication 1, dans lequel les outils sont des outils d'inspection pour inspecter la pièce à travailler suivant ou sur chacune des quatre faces latérales.

9. Procédé de positionnement d'une pièce à travailler, comprenant les étapes consistant à :
déplacer en translation une pièce à travailler sur des rouleaux pouvant tourner en oblique d'un tapis transporteur bidirectionnel sans rotation sur un trajet rectangulaire suivant les côtés d'une zone de travail rectangulaire ;
présenter à un outil une face latérale différente de la pièce à travailler suivant chaque côté de la zone de travail.

10. Procédé selon la revendication 9, dans lequel l'outil est un outil de coupe formant une coupure suivant une face latérale différente de la pièce à travailler suivant chaque côté de la zone de travail, dans lequel l'outil est de préférence un outil d'inspection inspectant la pièce à travailler suivant ou sur une face latérale différente de la pièce à travailler suivant chaque côté de la zone de travail.

11. Procédé selon la revendication 9, comprenant l'étape consistant à activer les rouleaux en rotation en coordination avec l'inversion du sens du tapis transporteur afin de pousser la pièce à travailler vers un côté de la zone de travail.

12. Procédé selon la revendication 9, comprenant l'étape consistant à fournir des surfaces de guidage autour de la périphérie de la zone de travail suivant laquelle une face latérale extérieure de la pièce à travailler chevauche la zone de travail lorsque la pièce à travailler est déplacée en translation.

13. Procédé selon la revendication 9, comprenant en outre l'étape consistant à détecter lorsque la pièce à travailler se trouve de chaque côté de la zone de travail.

14. Procédé selon la revendication 9, dans lequel le déplacement en translation d'une pièce à travailler sur un trajet rectangulaire comprend les étapes consistant à :
transporter la pièce à travailler en faisant avancer le tapis transporteur dans un premier sens avec les rouleaux désactivés vers une surface de guidage suivant un premier côté de la zone de travail ;
déplacer en translation la pièce à travailler perpendiculairement au premier sens suivant la surface de guidage sur le premier côté sur les rouleaux en oblique désactivés lorsque le tapis transporteur avance dans le premier sens, jusqu'à ce que la pièce à travailler atteigne un deuxième côté de la zone de travail ;
inverser le sens du tapis transporteur et activer les rouleaux afin de pousser la pièce à travailler suivant une surface de guidage sur le deuxième côté de la zone de travail lorsque le tapis transporteur avance dans le sens opposé au premier sens jusqu'à ce que la pièce à travailler atteigne un troisième côté de la zone de travail ;
désactiver les rouleaux et déplacer en translation la pièce à travailler perpendiculairement au premier sens suivant une surface de guidage sur le troisième côté sur les rouleaux en oblique désactivés lorsque le tapis transporteur avance dans le sens opposé au premier sens, jusqu'à ce que la pièce à travailler atteigne un quatrième côté de la zone de travail ;
inverser le sens du tapis transporteur et activer les rouleaux afin de pousser la pièce à travailler suivant une surface de guidage sur le quatrième côté de la zone de travail lorsque le tapis transporteur avance dans le premier sens jusqu'à ce que la pièce à travailler atteigne le premier côté de la zone de travail ;
déplacer en translation la pièce à travailler perpendiculairement au premier sens suivant la surface de guidage sur le premier côté sur les rouleaux en oblique désactivés lorsque le tapis transporteur avance dans le premier sens, jusqu'à ce que la pièce à travailler sorte de la zone de travail au niveau du deuxième côté.

15. Procédé selon la revendication 9, comprenant en outre l'étape consistant à apporter la pièce à travailler dans la zone de travail et à recevoir la pièce à travailler de la zone de travail transversalement à des côtés adjacents de la zone de travail.
